(19) Europäisches Patentamt
European Patent Office
Office européen des brevets

(11) **EP 4 375 779 A1**

(12) **EUROPEAN PATENT APPLICATION**

(43) Date of publication:
**29.05.2024 Bulletin 2024/22**

(21) Application number: **22209780.0**

(22) Date of filing: **28.11.2022**

(51) International Patent Classification (IPC):
**G05B 23/02** (2006.01)

(52) Cooperative Patent Classification (CPC):
**G05B 23/0283; F04D 13/086; F04D 15/0088;**
F05D 2230/72; F05D 2270/334

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Xylem Europe GmbH**
**8200 Schaffhausen (CH)**

(72) Inventors:
• **HALLGREN, Gert**
**126 39 Hägersten (SE)**
• **LARSSON, Martin**
**174 41 Sundbyberg (SE)**

(74) Representative: **Brann AB**
**P.O. Box 3690**
**Sveavägen 63**
**103 59 Stockholm (SE)**

(54) **METHOD FOR PERIODICALLY DETERMINING TIME-TO-SERVICE**

(57)     The invention relates to a method for periodically determining time-to-service of a submersible machine. Wherein the method comprises the following steps during each periodically determination:

- updating at least one of said calendar-time-to-service and said running-time-to-service, by:

- monitoring an operational parameter of the machine having effect on one of the calendar-time-to-service and the running-time-to-service,

- comparing the operational parameter value with a default operational parameter value, wherein a deviation in said comparison provides an adjustment-factor that is proportional to the deviation, and

- adjusting the calendar-time-to-service or the running-time-to-service based on the adjustment-factor,

- thereafter setting the time-to-service of the machine equal to the shortest of the calendar-time-to-service and the running-time-to-service.

Fig. 1

EP 4 375 779 A1

Processed by Luminess, 75001 PARIS (FR)

**Description**

Technical field of the Invention

The present invention relates generally to the field of methods for monitoring and controlling the operation of submersible machines such as pumps and mixers, configured for pumping, transporting and/or agitating liquid comprising solid matter, slurry, clean water, etc. Further, the present invention relates to the field of methods for monitoring and controlling the operation of submergible pumps, such as sewage/wastewater pumps and drainage/dewatering pumps, especially configured to pump liquid comprising solid matter such as sewage/wastewater, biomass slurries, drill mud, clean water, etc. Further, the present invention relates to the field of methods for monitoring and controlling the operation of submergible mixers, especially configured to transport/agitate liquid such as wastewater/sewage, biomass slurries, clean water, etc.

The submersible machines may also operate in liquid not comprising solid matter, and it shall be pointed out that the submersible machines must not be submerged during operation, but can be dry installed and/or partly submerged. Thus, the term submersible only defines that the machine may be submerged in liquid without becoming damaged, and the submersible machine may be wet installed and/or dry installed, and is of submergible type in both applications/installations.

The present invention relates specifically to a method for periodically determining time-to-service of a submersible machine, i.e. time left to service, wherein the machine for each periodically determination is associated with a calendar-time-to-service and a running-time-to-service, wherein the running-time-to-service is based on a running-time-left before service is required and a historic utilization rate of the machine.

Background of the Invention

All such submersible machines need service from time to time, primarily due to wear, in order to maintain good efficiency and secure intended and correct operation.

Today the service interval is in most cases a socalled Fixed Service Interval and is determined based on a max calendar-time-to-service, i.e. an interval having a fixed length. The operator plan and perform service on the machine before the end of the max calendar-time-to-service. In some sophisticated installations the Fixed Service Interval may comprise a possibility to be shortened if a max running-time between services is reached before the end of the max calendar-time-to-service. For instance, the max calendar-time-to-service is set to two years and the max running-time is set to 4000 hours of operation, and the service is performed when one of the two thresholds is reached. Of course different machines and different applications have appropriate max calendar-time-to-service and max running-time, but the thresholds are fixed for the specific machine and application and can be updated periodically after each performed service.

Thereto, it is conceivable that these machines also have different alarm functions that trig extra/emergency service in-between planned services, due to unplanned stand still for different reasons. Such reasons may be unbalances and elevated temperatures.

Thus, there is always a situation that the planned/fixed service is premature, as a safety measure in order to prevent unplanned stand still, or is too late, as an emergency measure due to unplanned stand still.

A planned service is costly but an unplanned service is even more costly and the process/operation of the pump station, treatment tank, etc., is affected by unplanned stand still, leading to overflow, incorrect treatment, etc.

Object of the Invention

The present invention aims at obviating the aforementioned disadvantages and failings of previously known methods to periodically determine time-to-service of a submersible machine, and at providing an improved method for periodically determining time-to-service of a submersible machine.

A primary object of the present invention is to provide an improved method for periodically determining time-to-service of a submersible machine of the initially defined type, such that the service is performed when needed, i.e. not premature and not too late. Thus, it is on object of the present invention to have as long service interval as possible with minimal or no risk of unplanned stand still.

Summary of the Invention

According to the invention at least the primary object is attained by means of the initially defined method having the features defined in the independent claim. Preferred embodiments of the present invention are further defined in the dependent claims.

According to the present invention, there is provided a method for periodically determining time-to-service of a submersible machine, wherein the method comprises the following steps during each periodically determination:

- updating at least one of said calendar-time-to-service and said running-time-to-service, by:

  - monitoring an operational parameter of the machine having effect on one of the calendar-time-to-service and the running-time-to-service,
  - comparing the operational parameter value with a default operational parameter value, wherein a deviation in said comparison provides an adjustment-factor that is proportional to the deviation, and
  - adjusting the calendar-time-to-service or the running-time-to-service based on the adjustment-factor,

- thereafter setting the time-to-service of the machine equal to the shortest of the calendar-time-to-service and the running-time-to-service.

Thus, the present invention is based on the insight of the inventors that it is advantageous to be able to adjust and adapt the time-to-service, i.e. to have a Dynamic Service Interval instead of Fixed Service Interval. The general idea of a Dynamic Service Interval is that the calendar-time-to-service and/or the running-time-to-service can be prolonged or shortened depending on the nature/characteristics of the actual operation of the submersible machine. The nature/characteristics of the actual operation of the submersible machine is determined by monitoring one or more operational parameters and comparing the operational parameter value with a default operational parameter value.

According to various embodiments of the present invention, the method comprises the following sub-steps during each step of updating at least one of said calendar-time-to-service and said running-time-to-service:

- monitoring a first operational parameter (OP1) having effect on the calendar-time-to-service,
- comparing the first operational parameter value (OP1) with a default first operational parameter value (D-OP1), wherein a deviation in said comparison provides a calendar-time adjustment-factor that is proportional to the deviation,
- adjusting the calendar-time-to-service based on said calendar-time adjustment-factor, and
- monitoring a second operational parameter (OP2) having effect on the running-time-left of the machine,
- comparing the second operational parameter value (OP2) with a default second operational parameter value (D-OP2), wherein a deviation in said comparison provides a running-time adjustment-factor that is proportional to the deviation,
- adjusting the running-time-to-service based on said running-time adjustment-factor,

- thereafter setting the time-to-service of the machine equal to the shortest of the calendar-time-to-service and the running-time-to-service.

Thereby both the calendar-time-to-service and the running-time-to-service are prolonged or shortened depending on the nature/characteristics of the actual operation of the submersible machine.

According to various embodiments of the present invention, the operational parameter (OP1) having effect on the calendar-time-to-service, is the temperature of the machine.

Thus, elevated temperature of the machine, for instance due to unsatisfactory cooling coming from external fouling, internal clogging, elevated power usage, etc., will have direct effect on the aging of internal components/elements of the machine.

According to various embodiments of the present invention, the operational parameter (OP1) having effect on the calendar-time-to-service, is the level of vibrations of the machine when the machine is inactive.

Thus, vibrations in the machine when the machine is inactive/idle, i.e. non-operation, is detrimental/negative for the machine since for instance lubrication is not distributed correctly and thereby the rolling elements of the bearings are misplaced and the forces are not properly distributed, and internal components/elements of the machine may be damaged.

According to various embodiments of the present invention, the operational parameter (OP2) having effect on the running-time-to-service, is the operational speed of the machine.

Thus, an elevated operational speed will stress the machine and have direct effect on the aging/wear of internal components/elements of the machine.

Further advantages with and features of the invention will be apparent from the other dependent claims as well as from the following detailed description of preferred embodiments.

Brief description of the drawings

A more complete understanding of the abovementioned and other features and advantages of the present invention will be apparent from the following detailed description of preferred embodiments in conjunction with the appended drawings, wherein:

Fig. 1    is a schematic cross-sectional view of an illustrative submersible pump,
Fig. 2    is a schematic cross-sectional view of an illustrative submersible mixer,
Fig. 3    is a schematic graph over an adjustment factor corresponding to the temperature of the machine,
Fig. 4    is a schematic graph over an adjustment factor corresponding to the vibrations of the machine when the machine is inactive,
Fig. 5    is a schematic graph over an adjustment factor corresponding to the operational speed of the machine, and
Fig. 6    is a schematic graph over an adjustment factor corresponding to the vibrations of the machine when the machine is active.

Detailed description of preferred embodiments of the invention

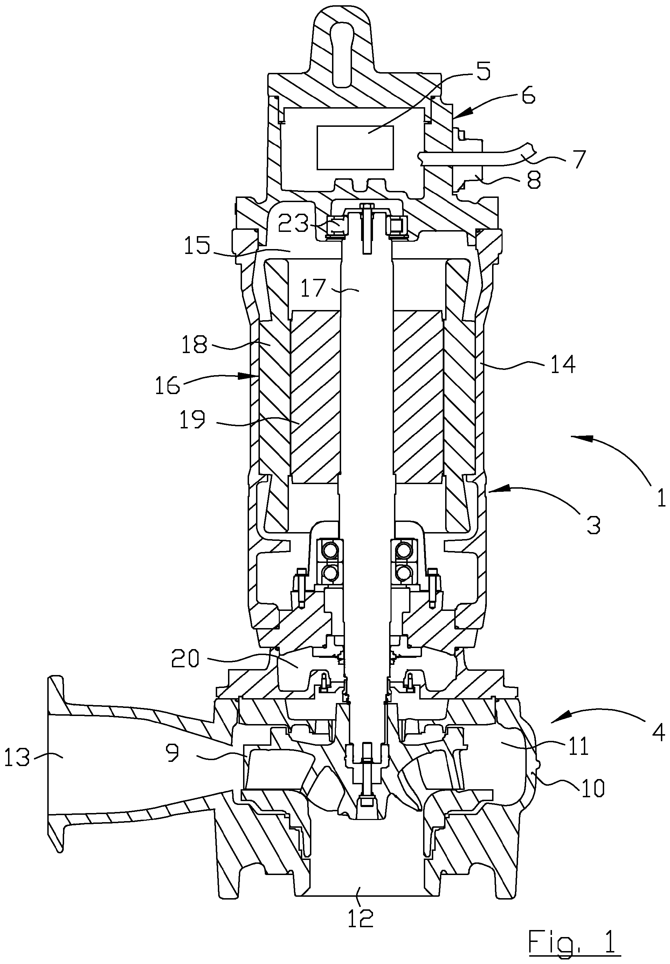

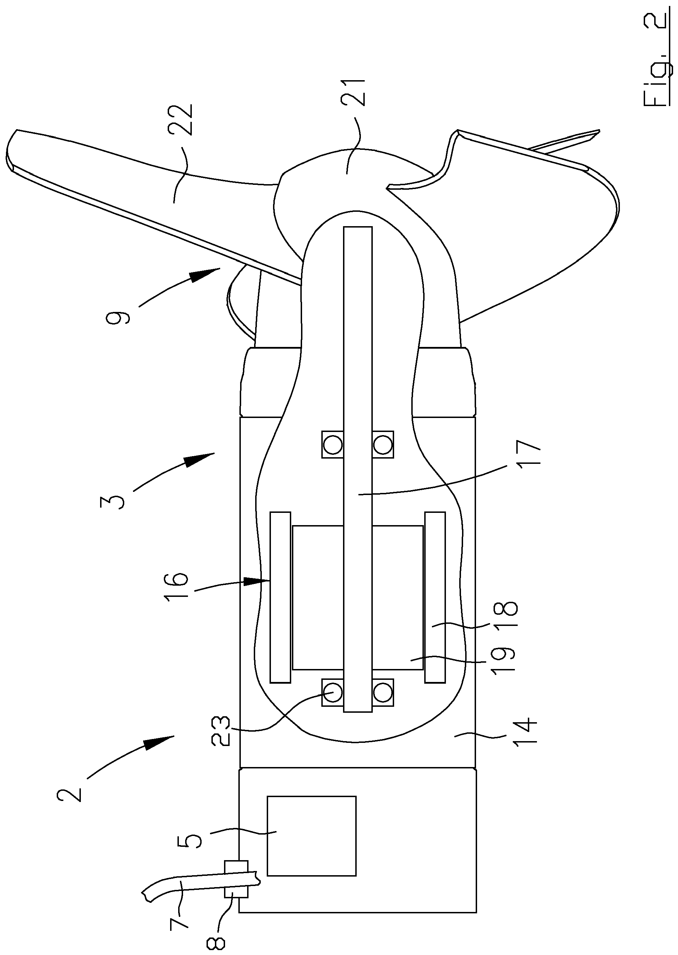

The present invention relates specifically to the field of methods for monitoring and controlling the operation of submersible machines such as pumps and mixers, configured for pumping, transporting, treating and/or agitating liquid. Figure 1 disclose a schematic cross-sectional view of an illustrative submersible pump, generally designated 1, and figure 2 disclose a schematic cross-sectional view of an illustrative submersible mixer or flow generator, generally designated 2. Herein, machine is a generic term and pump/mixer are specific terms, and it shall be pointed out that the present invention is directed towards a machine and everything disclosed in connection with a pump is applicable to a mixer, and vice versa, if nothing else is stated/evident.

The pump 1 can be constituted by a submersible sewage/wastewater pump or a submersible drainage/dewatering pump. Reference is initially made to figure 1.

The pump 1 comprises two major parts, a drive unit, generally designated 3, and a hydraulic unit, generally designated 4. Thereto the pump 1 is associated with a control unit 5. The control unit 5 monitors and controls the operation of the pump 1. In the disclosed embodiment the control unit 5 is integrated into and constitutes a part of the pump 1, i.e. the control unit 5 is located in a top unit 6 of the drive unit 3 of the pump 1. According to alternative embodiments the control unit 5 is constituted by a separate/external member and is operatively connected to the pump 1, or the control unit 5 is a combination of internal and external elements. An electric cable 7 extending from a power supply, for instance the power mains, provides power to the pump 1, the pump 1 comprising a liquid tight lead-through 8 receiving the electric cable 7. The electric cable 7 may also comprise signal wires for data communication between the pump and any external control unit. The control unit 5 comprises a Variable Frequency Drive (VFD). The control unit 5 is configured to perform the inventive method.

The submersible pump 1 is configured to be located entirely submerged, however it shall be pointed out that a submersible pump 1 can be partly or entirely located above the liquid surface during operation. According to the disclosed embodiment, the pump 1 is cooled by the liquid/media surrounding the drive unit 3, but the pump 1 may also or alternatively be cooled by a cooling arrangement comprising a cooling jacket surrounding at least parts of the pump 1.

The hydraulic unit 4 comprises an impeller 9 configured for transporting/pumping the liquid. The hydraulic unit 4 comprises a pump housing 10 defining a volute 11, also known as pump chamber. Thereto, the hydraulic unit 4 comprises an inlet opening 12 and an outlet opening 13, wherein the volute 1 is located between said inlet 12 and outlet 13. The impeller 9 is located in the volute 11 and is configured to move liquid from the inlet opening 12 to the outlet opening 13 via the volute 11, when the submersible pump 1 is in operation. According to the disclosed embodiment the impeller 9 is a socalled open impeller, but the present invention is also applicable to pumps 1 having a socalled closed impeller. An open impeller 9 comprises an upper shroud, a hub and one or more vanes extending from the shroud and hub. A closed impeller thereto comprises a lower shroud, wherein the vanes extend between the upper and lower shrouds.

The drive unit 3 comprises a drive unit housing 14 defining a motor compartment 15, an electric motor 16 being arranged in the motor compartment 15 and a drive shaft 17 connected to and driven in rotation by the electric motor 16. The electric motor 16 comprises a stator 18 and a rotor 19, wherein the drive shaft 17 is connected to the rotor 19 of the electric motor 16 in a conventional way. The drive shaft 17 extends from the electric motor 16 of the drive unit 3 to the hydraulic unit 4, wherein the impeller 9 is connected to and driven in rotation by the drive shaft 17 during operation of the submersible pump 1. Thus, the pump 1 is configured to be operated at a variable operational speed [rpm], by means of the control unit 5 that is configured to control the operational speed of the pump 1. The operational speed of the pump 1 is more precisely the rpm of the electrical motor 16 and of the impeller 9 and correspond/relate to a VFD output frequency.

The top unit 6, or electronics/connection chamber, is separated from the motor compartment 15 in a liquid tight manner. The volute 11 is separated from the liquid tight motor compartment 15 by means of a liquid seal chamber 20, preventing the pumped liquid to reach the motor compartment 15 along the drive shaft 17. The different housing parts of the pump 1 and the impeller 9 are preferably made of metal, such as aluminum and/or iron/steel.

Reference is now made to figure 2, disclosing a mixer or flow generator 2, and elements/components of the mixer 2 corresponding to elements/components of the pump 1 are given the same reference numbers.

The mixer 2 is a submersible mixer machine and comprises three major parts, a drive unit 3, a rotatable impeller/propeller 9 and a control unit 5. The control unit 5 monitors and controls the operation of the mixer 2. The drive unit 3 drives the propeller 9 in rotation and the propeller 9 propels the liquid, i.e. provides thrust to the liquid. The drive unit 3 and the propeller 9 are always part of the mixer 2, and in the disclosed embodiment the control unit 5 is integrated into and constitutes a part of the mixer 2. In an alternative embodiment the control unit 5 is constituted by a separate member and is operatively connected to the mixer 2. The mixer 2 is also commonly called mixer machine or flow generator. In the disclosed embodiment the mixer is configured to be located entirely submerged. However, it shall be pointed out that a submersible mixer 2 can be partly located above the liquid surface during operation. The mixer 2 is cooled by the liquid surrounding the drive unit 3.

An electric cable 7 extending from a power supply, for instance the power mains, provides power to the mixer 2, the mixer 2 comprising a liquid tight lead-through 8 receiving the electric cable 7. The electric cable 7 may also comprise signal wires for data communication between the flow generator and an external control unit (not shown). The drive unit 3 comprises an electric motor 16 and a drive shaft 17 connected to and driven in rotation by said electric motor 16 during operation of the mixer 2. The electric motor 8 comprises in a conventional way a stator 18 and a rotor 19.

The electric motor 16 is located in a drive unit housing 14 and in the disclosed embodiment the propeller 9 is located in direct contact with the drive unit housing 14, the drive unit housing 14 being a liquid tight housing. However, in alternative embodiments the propeller 9 is located at a distance from the drive unit housing 14, i.e. the drive shaft 17 is visible between the drive unit housing 14 and the propeller 9.

The propeller 9 comprises a hub 21 connected to the drive shaft 17 and a plurality of blades 22 connected to said hub 21, wherein the drive shaft 17 extends in an axial direction and each blade 22 extends in a radial direction seen from its base to its top. It shall be pointed out that the blades 22 also have an extension in the axial direction, i.e. has a pitch, in order to generate thrust to the liquid.

The control unit 5 is operatively connected to the electric motor 16, the control unit 5 being configured for monitoring and controlling the operation of the mixer 2. The electric motor 16 is configured to be driven in operation by the control unit 5. Thus, the control unit 5 is configured to control the rotational speed at which said electric motor 16 of the mixer is to be driven, for instance by controlling the frequency of the current operating the electric motor 16. According to the disclosed embodiment, the control unit 5 comprises a Variable Frequency Drive (VFD). Thus, the mixer 2 is configured to be operated at variable operational speed. The control unit 5 is configured to perform the inventive method.

The inventive method is arranged for periodically determining time-to-service of the submersible machine, pump 1 or mixer 2. Time-to-service, i.e. time left before service is needed/recommended in order to avoid unplanned stand still or at least in order to avoid inefficient operation of the machine, is equal to the shortest of the calendar-time-to-service and the running-time-to-service. The calendar-time-to-service is the required/recommended time left to service independently on the utilization rate of the machine. Utilization rate is for instance represented by hours per day, minutes per hour, etc. that the machine is in operation. The running-time-to-service is based on a running-time-left before service is required and a historic utilization rate of the machine. Thus, running-time-left is for instance represented by the total hours, minutes, etc. that the machine may be in operation before service is required/recommended. Running-time-left together with a value of the historic utilization rate of the machine provides the required/recommended time left to service depending on the utilization rate of the machine.

The historic utilization rate is for instance a mean value, weighted mean value, etc., and provides a good measure about the future degree of utilization of the machine. Thus, less old information about historic utilization rate may be given more relevance than more old information about historic utilization rate.

Each period can have the length of one or more seconds, one or more minutes, one or more hours, etc.

At the beginning of each period the machine is associated with a stored calendar-time-to-service and a stored running-time-to-service, and at the end of the period the machine is associated with an updated calendar-time-to-service based on consumed calendar-time during the period and an updated running-time-to-service based on consumed running-time during the period. This is correct when the operation of the machine is normal/optimal and does not involve any need to adjust the service plan. When the operation of the machine deviates from normal/optimal operation, the service plan has to be adjusted in accordance with the inventive method.

According to the inventive method the following steps are performed during each periodically determination:

- updating at least one of said calendar-time-to-service and said running-time-to-service, by:

  - monitoring an operational parameter of the machine having effect on one of the calendar-time-to-service and the running-time-to-service,

- comparing the operational parameter value with a default operational parameter value, wherein a deviation in said comparison provides an adjustment-factor that is proportional to the deviation, and
- adjusting the calendar-time-to-service or the running-time-to-service based on the adjustment-factor,

- thereafter setting the time-to-service of the machine equal to the shortest of the calendar-time-to-service and the running-time-to-service.

Thus, during operation of the machine, pump or mixer, the control unit 5 monitors one or more operational parameters of the machine. Each operational parameter has effect on at least one of the calendar-time-to-service and running-time-to-service. Each operational parameter has a default/rated operational parameter value that requires no adjustment to the time-to-service, i.e. when the measured/monitored operational parameter value is determined by the control unit 5 to be equal to the corresponding default/rated value (no deviation), the calendar-time-to-service or the running-time-to-service or time-to-service does not need to be adjusted. In other words the adjustment factor in such cases is equal to 1.

In other cases, i.e. when the control unit 5 determines that there is a deviation between the measured/monitored operational parameter value and the default/rated operational parameter value, an adjustment-factor different from 1 is established by the control unit 5. The adjustment-factor is proportional to the deviation and is different for all monitored operational parameters. If the deviation between the measured/monitored operational parameter value and the default/rated operational parameter value provides an adjustment-factor greater than 1 the momentary operation of the machine is more favourable than the normal operation and thereby the calendar-time-to-service and/or the running-time-to-service is prolonged. If the deviation between the measured/monitored operational parameter value and the default/rated operational parameter value provides an adjustment-factor less than 1 the momentary operation of the machine is more unfavourable than the normal operation and thereby the calendar-time-to-service and/or the running-time-to-service is shortened.

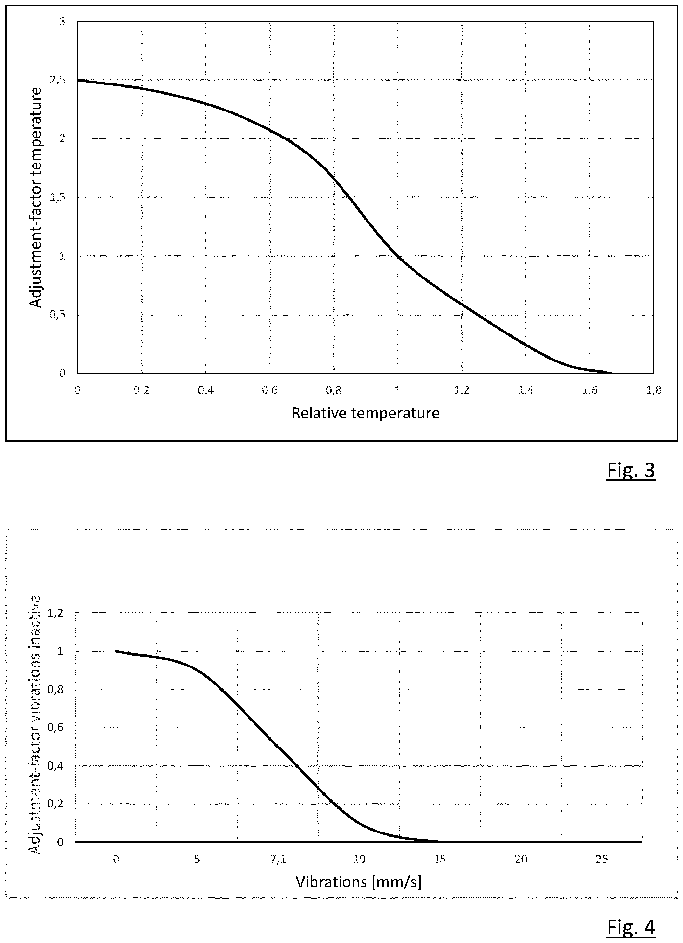

The proportionality or relationship between the value deviation and the corresponding adjustment-factor for the specific operational parameter is according to various embodiments provided in a look-up table. According to other embodiments the proportionality or relationship is provided by a mathematic relationship/formula/graph as illustrated in figures 3-6.

According to various embodiments of the invention the calendar-time-to-service is a fixed value and the running-time-to-service is updated. Thus, only operational parameters having direct effect on the running-time-to-service are monitored. Such embodiments, comprises monitoring of one or more operational parameters having direct effect on the running-time-to-service.

According to various embodiments, the method comprises the following sub-steps during each step of updating at least one of said calendar-time-to-service and said running-time-to-service:

- monitoring a first operational parameter (OP1) having effect on the calendar-time-to-service,
- comparing the first operational parameter value (OP1) with a default first operational parameter value (D-OP1), wherein a deviation in said comparison provides a calendar-time adjustment-factor that is proportional to the deviation,
- adjusting the calendar-time-to-service based on said calendar-time adjustment-factor, and
- monitoring a second operational parameter (OP2) having effect on the running-time-left of the machine,
- comparing the second operational parameter value (OP2) with a default second operational parameter value (D-OP2), wherein a deviation in said comparison provides a running-time adjustment-factor that is proportional to the deviation,
- adjusting the running-time-to-service based on said running-time adjustment-factor,

- thereafter setting the time-to-service of the machine equal to the shortest of the calendar-time-to-service and the running-time-to-service.

Thus, such embodiments comprise monitoring of one or more operational parameters having direct effect on the running-time-to-service and comprise monitoring of one or more operational parameters having direct effect on the calendar-time-to-service.

According to a preferred embodiment of the invention, the step of updating said running-time-to-service is performed by means of the following sub-steps,

- monitoring a second operational parameter (OP2) having effect on the running-time-left of the machine,
- comparing the second operational parameter value (OP2) with a default second operational parameter value (D-OP2), wherein a deviation in said comparison provides a running-time adjustment-factor that is proportional to the deviation,
- adjusting the running-time-to-service based on said running-time adjustment-factor, by:

  - adjusting the running-time-left based on said running-time adjustment-factor, and
  - adjusting the running-time-to-service based on the adjusted running-time-left and the historic utilization rate of the machine.

Thus, the available running time left before service is needed/required is adjusted, i.e. increased or decreased, and thereby the running-time-to-service may be determined based on the historic utilization rate and the updated running-time-left.

According to various embodiments, the adjustment of the running-time-left comprises multiplying the running-time-left and the running-time adjustment-factor, and the adjustment of the calendar-time-to-service comprises multiplying the calendar-time-to-service and the calendar-time adjustment-factor.

Reference is now made to figure 3, disclosing an example illustration of the correlation between an adjustment factor of an operational parameter having direct effect on the calendar-time-to-service. The operational parameter (OP1) having effect on the calendar-time-to-service, is the temperature of the machine.

Figure 3 illustrates the correlation between the adjustment-factor and the temperature of a bearing 23 of the drive shaft 17 of the machine, i.e. the temperature of the lubrication of the bearing 23. The function of the bearings 23 is dependent on the condition of the lubrication of the bearings 23, and the lubrication is sensitive to elevated temperatures since it will age and decompose prematurely. The temperature of the machine may also/alternatively be measured at the control unit 5 of the machine, at the electric motor 16 of the machine, etc. Such measurements/temperatures may have specific correlation to the temperature of the bearings 23 whereby the correlation between the adjustment-factor and the temperature of a bearing 23 of the drive shaft 17 of the machine according to figure 3 may be used, or such measurements/temperatures may have their own correlation to the adjustment-factor.

According to figure 3, the X-axis comprises a relative temperature in relation to the default/rated operational parameter value, i.e. the value on the X-axis multiplied with the default/rated operational parameter value. The Y-axis comprises the corresponding adjustment-factor. When the temperature of the machine is equal to the default/rated temperature, the adjustment-factor is equal to 1. According to the illustrating example, the correlation/graph may be defined by the following formula, wherein the terms are rounded: Adjustment-factor temperature = $0{,}72*T^4 - 1{,}06*T^3 - 1{,}24*T^2 + 0{,}19*T + 2{,}49$

The default/rated operational parameter value (D-OP1), i.e. the temperature of the bearings 23 is equal to or more than 80 degrees Celsius, and equal to or less than 100 degrees Celsius, preferably equal to or more than 85 degrees Celsius and equal to or less than 95 degrees Celsius. In the disclosed embodiment the default operational parameter value (D-OP1) is 90 degrees Celsius.

Reference is now made to figure 4, disclosing an example illustration of the correlation between an adjustment factor of another operational parameter having direct effect on the calendar-time-to-service. The operational parameter (OP1) having effect on the calendar-time-to-service, is the level of vibrations of the machine when the machine is inactive. Vibrations of the machine when the machine is inactive/idle is negative for the machine since the lubrication in the bearings 23 is not distributed correctly and thereby the rolling elements of the bearings 23 are misplaced and the forces are not properly distributed and the bearings 23 may be damaged.

According to figure 4, the X-axis comprises a true vibration of the machine measured in millimetres per second. The Y-axis comprises the corresponding adjustment-factor. When the vibration of the inactive machine is equal to the default/rated vibration, the adjustment-factor is equal to 1. The default/rated operational parameter value (D-OP1), i.e. the vibrations of the inactive machine is 0 mm/s.

According to the illustrating example, the correlation/graph may be defined by the following set of formulas, wherein the terms are rounded:

Adjustment-factor vibrations inactive (vibrations in the range 0-5 mm/s) = $- 0{,}02*VR + 1$
Adjustment-factor vibrations inactive (vibrations in the range 5-10 mm/s) = $- 0{,}016*VR + 1{,}669$
Adjustment-factor vibrations inactive (vibrations in the range 10-15 mm/s) = $- 0{,}02*VR + 0{,}3$
Adjustment-factor vibrations inactive (vibrations above 15 mm/s) = 0

The default/rated operational parameter value (D-OP1), i.e. the level of vibrations of the inactive machine is equal to or more than 0 mm/s and equal to or less than 5 mm/s, preferably equal to or less than 2 mm/s. The vibration of the machine is measured at the control unit 5 of the machine and/or at the bearings 23 of the machine.

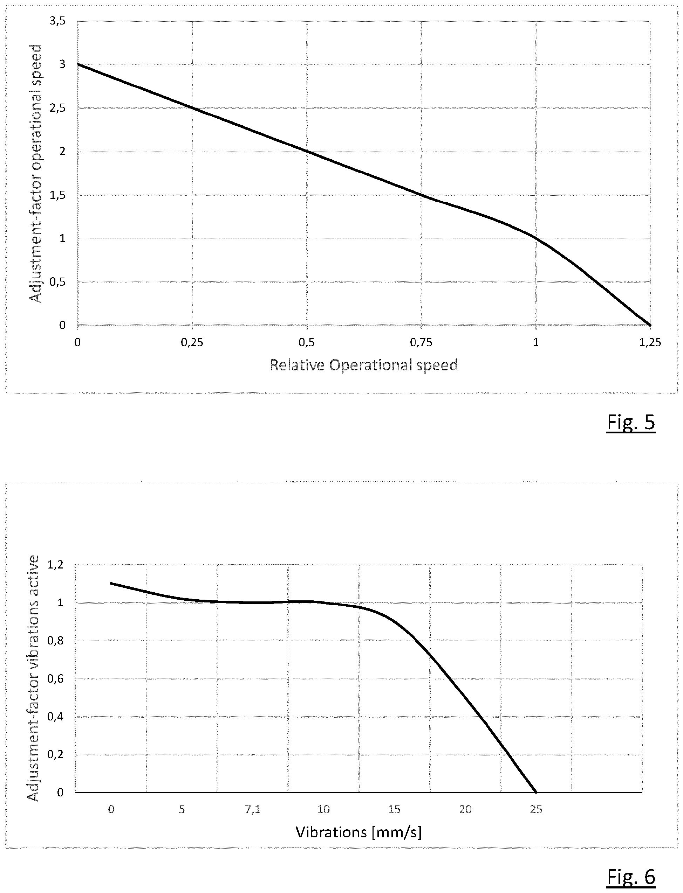

Reference is now made to figure 5, disclosing an example illustration of the correlation between an adjustment factor of an operational parameter having direct effect on the running-time-to-service. The operational parameter (OP2) having effect on the running-time-to-service, is the operational speed/frequency of the machine.

According to figure 5, the X-axis comprises a relative operational speed of the machine in relation to the default/rated operational parameter value, i.e. the value on the X-axis multiplied with the default/rated operational parameter value. The Y-axis comprises the corresponding adjustment-factor. When the operational speed of the machine is equal to the default/rated operational speed, the adjustment-factor is equal to 1. According to the illustrating example, the correlation/graph may be defined by the following formula, wherein the terms are rounded: Adjustment-factor operational

$$\text{speed} = -1,48*OS^3 + 2,06*OS^2 - 2,66*OS + 3,08$$

The rated/nominal operational speed of the machine varies typically in the range 200-6000 rpm for different machines. The default/rated operational parameter value (D-OP2) (), is equal to or more than 90% of the nominal operational speed of the machine and equal to or less than 110% of the nominal operational speed, preferably equal to or more than 95% of the nominal operational speed and equal to or less than 105% of the nominal operational speed. In the disclosed embodiment the default operational parameter value (D-OP2) is 100% of the nominal operational speed of the machine.

Reference is now made to figure 6, disclosing an example illustration of the correlation between an adjustment factor of another operational parameter having direct effect on the running-time-to-service. The operational parameter (OP2) having effect on the running-time-to-service, is the level of vibrations of the machine when the machine is active.

According to figure 6, the X-axis comprises a true vibration of the machine measured in millimetres per second. The Y-axis comprises the corresponding adjustment-factor. When the vibration of the active machine is equal to the default/rated vibration, the adjustment-factor is equal to 1. The default/rated operational parameter value (D-OP2), i.e. the vibrations of the active machine is about 7 mm/s.

According to the illustrating example, the correlation/graph may be defined by the following formula, wherein the terms are rounded: Adjustment-factor vibrations active = $-0,0001*VR^3 + 0,002*VR^2 - 0,017*VR + 1,016$

The default operational parameter value (D-OP2), given that the operational parameter is the level of vibrations of running machine, is equal to or more than 5 mm/s and equal to or less than 15 mm/s, preferably equal to or less than 10 mm/s. The vibration of the machine is measured at the control unit 5 of the machine and/or at the bearings 23 of the machine.

Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicate mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

**Claims**

1. Method for periodically determining time-to-service of a submersible machine (1, 2), wherein the machine for each periodically determination is associated with a calendar-time-to-service and a running-time-to-service, wherein the running-time-to-service is based on a running-time-left before service is required and a historic utilization rate of the machine,
   wherein the method is **characterized by** performing the following steps during each periodically determination:

   - updating at least one of said calendar-time-to-service and said running-time-to-service, by:

      - monitoring an operational parameter of the machine having effect on one of the calendar-time-to-service and the running-time-to-service,

- comparing the operational parameter value with a default operational parameter value, wherein a deviation in said comparison provides an adjustment-factor that is proportional to the deviation, and
- adjusting the calendar-time-to-service or the running-time-to-service based on the adjustment-factor,

- thereafter setting the time-to-service of the machine equal to the shortest of the calendar-time-to-service and the running-time-to-service.

2. The method for periodically determining time-to-service of a submersible machine (1, 2) according to claim 1, wherein the calendar-time-to-service is a fixed value and the running-time-to-service is updated.

3. The method for periodically determining time-to-service of a submersible machine (1, 2) according to claim 1, wherein the machine for each periodically determination is associated with a calendar-time-to-service and a running-time-to-service, wherein the running-time-to-service is based on a running-time-left before service is required and a historic utilization rate of the machine,
wherein the method comprises the following sub-steps during each step of updating at least one of said calendar-time-to-service and said running-time-to-service:

- monitoring a first operational parameter (OP1) having effect on the calendar-time-to-service,
- comparing the first operational parameter value (OP1) with a default first operational parameter value (D-OP1), wherein a deviation in said comparison provides a calendar-time adjustment-factor that is proportional to the deviation,
- adjusting the calendar-time-to-service based on said calendar-time adjustment-factor, and
- monitoring a second operational parameter (OP2) having effect on the running-time-left of the machine,
- comparing the second operational parameter value (OP2) with a default second operational parameter value (D-OP2), wherein a deviation in said comparison provides a running-time adjustment-factor that is proportional to the deviation,
- adjusting the running-time-to-service based on said running-time adjustment-factor,
- thereafter setting the time-to-service of the machine equal to the shortest of the calendar-time-to-service and the running-time-to-service.

4. The method according to any preceding claim, wherein the method comprises the following sub-steps during each step of updating said running-time-to-service:

- monitoring a second operational parameter (OP2) having effect on the running-time-left of the machine,
- comparing the second operational parameter value (OP2) with a default second operational parameter value (D-OP2), wherein a deviation in said comparison provides a running-time adjustment-factor that is proportional to the deviation,
- adjusting the running-time-to-service based on said running-time adjustment-factor, by:

- adjusting the running-time-left based on said running-time adjustment-factor, and
- adjusting the running-time-to-service based on the adjusted running-time-left and the historic utilization rate of the machine.

5. The method according to claim 4, wherein the adjustment of the running-time-left comprises multiplying the running-time-left and the running-time adjustment-factor.

6. The method according to claim 1 or 3, wherein the adjustment of the calendar-time-to-service comprises multiplying the calendar-time-to-service and the calendar-time adjustment-factor.

7. The method according to any preceding claim, wherein the operational parameter (OP1) having effect on the calendar-time-to-service, is the temperature of the machine (1, 2).

8. The method according to claim 7, wherein the default operational parameter value (D-OP1), given that the operational parameter is the temperature of the machine, is equal to or more than 85°C and equal to or less than 95°C.

9. The method according to claim 7 or 8, wherein the temperature is measured at an electric motor (16) of the machine, at a bearing (23) of the machine, or at the control unit (5) of the machine.

10. The method according to any preceding claim, wherein the operational parameter (OP1) having effect on the calendar-time-to-service, is the level of vibrations of the machine when the machine is inactive.

11. The method according to claim 10, wherein the default operational parameter value (D-OP1), given that the operational parameter is the level of vibrations of inactive machine, is equal to or more than 0 mm/s and equal to or less than 5 mm/s, preferably equal to or less than 2 mm/s.

12. The method according to claim 10 or 11, wherein the level of vibrations is measured at the control unit (5) of the machine.

13. The method according to any preceding claim, wherein the operational parameter (OP2) having effect on the running-time-to-service, is the operational speed of the machine.

14. The method according to claim 13, wherein the default operational parameter value (D-OP2), given that the operational parameter is the operational speed of the machine, is equal to or more than 90% of the rated operational speed and equal to or less than 110% of the rated operational speed, preferably equal to or more than 95% of the rated operational speed and equal to or less than 105% of the rated operational speed.

15. The method according to any preceding claim, wherein the operational parameter (OP2) having effect on the running-time-to-service, is the level of vibrations of the machine when the machine is running.

16. The method according to claim 15, wherein the default operational parameter value (D-OP2), given that the operational parameter is the level of vibrations of running machine, is equal to or more than 5 mm/s and equal to or less than 15 mm/s, preferably equal to or less than 10 mm/s.

17. The method according to claim 15 or 16, wherein the level of vibrations is measured at the control unit (5) of the machine.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

**EP 22 20 9780**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/200200 A1 (AKULA DHEERAJ [CA]) 1 July 2021 (2021-07-01) | 1,2,6-17 | INV. G05B23/02 |
| A | * paragraph [0070] - paragraph [0081] * * paragraph [0097] - paragraph [0101] * ----- | 3-5 | |
| A | WO 96/40316 A1 (COBE LAB [US]) 19 December 1996 (1996-12-19) * page 14, line 9 - page 15, line 18 * ----- | 1 | |
| A | US 2020/191130 A1 (VAN DER SPEK ALEX [NL] ET AL) 18 June 2020 (2020-06-18) * paragraph [0050] - paragraph [0054] * ----- | 1 | |

TECHNICAL FIELDS SEARCHED (IPC)

G05B

The present search report has been drawn up for all claims

| Place of search | Date of completion of the search | Examiner |
|---|---|---|
| The Hague | 11 April 2023 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 9780

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2023

| Patent document cited in search report | | Publication date | Patent family member(s) | | Publication date |
|---|---|---|---|---|---|
| US 2021200200 | A1 | 01-07-2021 | US 2021200200 A1 | | 01-07-2021 |
| | | | US 2022083044 A1 | | 17-03-2022 |
| WO 9640316 | A1 | 19-12-1996 | CA 2217998 A1 | | 19-12-1996 |
| | | | EP 0830154 A1 | | 25-03-1998 |
| | | | JP 4049813 B2 | | 20-02-2008 |
| | | | JP H11506682 A | | 15-06-1999 |
| | | | US 5629871 A | | 13-05-1997 |
| | | | WO 9640316 A1 | | 19-12-1996 |
| US 2020191130 | A1 | 18-06-2020 | AU 2010260026 A1 | | 19-01-2012 |
| | | | AU 2016200646 A1 | | 25-02-2016 |
| | | | AU 2017210621 A1 | | 24-08-2017 |
| | | | CA 2765155 A1 | | 16-12-2010 |
| | | | CL 2011003135 A1 | | 25-05-2012 |
| | | | EP 2440784 A1 | | 18-04-2012 |
| | | | US 2012141301 A1 | | 07-06-2012 |
| | | | US 2020191130 A1 | | 18-06-2020 |
| | | | WO 2010144782 A1 | | 16-12-2010 |

EPO FORM P0459

For more details about this annex : see Official Journal of the European Patent Office, No. 12/82